# FASCICULE DE BREVET EUROPEEN

(11) **EP 2 350 600 B1**
(45) Date de publication et mention de la délivrance du brevet: **19.07.2017**
(21) Numéro de dépôt: 09795497.8
(22) Date de dépôt: 23.11.2009
(51) Int. Cl.: G01M 3/28, F17D 5/06

(54) **PROCÉDÉ ET DISPOSITIF DE DÉTECTION D'ÉCOULEMENT D'UN LIQUIDE**
VERFAHREN UND EINRICHTUNG ZUM DETEKTIEREN DES FLUSSES EINER FLÜSSIGKEIT
METHOD AND DEVICE FOR DETECTING THE FLOW OF A LIQUID

(30) Priorité: 24.11.2008 FR 0857950
(43) Date de publication de la demande: 03.08.2011
(73) Titulaire: Watts Industries France, 84270 Vedene (FR)
(72) Inventeur: MENET, Georges, F-73800 (FR)
(74) Mandataire: Casalonga, Axel
(86) Numéro de dépôt international: PCT/FR2009/052262
(87) Numéro de publication internationale: WO 2010/058141

(56) Documents cités:
- EP-A- 1 517 128
- DE-A1-102006 036 518
- FR-A- 2 694 087
- US-A- 4 735 231
- US-A- 5 377 529
- US-A1- 2002 148 515
- US-A1- 2005 224 118
- US-A1- 2008 266 125
- US-B1- 6 963 808

## Description

La présente invention concerne le domaine des installations consommatrices d'un liquide, par exemple des installations de distribution d'eau sanitaire dans des habitations ou dans les réseaux de distributions vers des habitations.

Dans de telles installations, il est fréquent que la consommation d'eau peut être fortement accrue par rapport aux besoins des utilisateurs à cause de fuites ou de micro-fuites résultant d'une détérioration en général non visible des conduits, des joints et des robinets. De telles pertes d'eau engendrent des pertes pécuniaires tant en amont du fait de traitements inutiles de l'eau perdue qu'en aval pour les utilisateurs des installations.

Le document US 4 735 231 décrit un dispositif de détection d'écoulements au travers d'une électrovanne, dans lequel les signaux issus d'un capteur unique de pression en aval de l'électrovanne sont envoyés à un circuit électronique qui comprend une pluralité de chronomètres mis en route sélectivement pour en déduire, selon un programme, l'existence de grandes fuites ou de petites fuites.

Le document US 2002/0148515 décrit une électrovanne qui comprend des organes mécaniques aptes à se déplacer en fonction de fuites, ces déplacements étant par ailleurs détectés pour en déduire l'existence de telles fuites.

La présente invention a pour but de surveiller les conditions d'écoulement dans les installations afin par exemple de pouvoir repérer s'il existe des écoulements correspondant à des fuites ou des micro-fuites, tout en ne perturbant pas les écoulements correspondant aux besoins des utilisateurs.

La présente invention a pour objet un procédé de détection d'écoulement d'un liquide, en particulier d'eau, dans une installation consommatrice comprenant au moins un moyen d'ouverture/fermeture pour délivrer du liquide, cette installation étant alimentée via une conduite d'entrée équipée d'une électrovanne, d'un capteur de pression en amont de l'électrovanne apte à délivrer un signal de pression amont (Pam) et d'un capteur de pression en aval de l'électrovanne apte à délivrer un signal de pression aval.

Le procédé comprend le calcul de la différence entre la valeur signal de pression amont (Pam) et la valeur du signal de pression aval et la comparaison de cette différence avec un seuil de déclenchement d'ouverture (SΔPo) et un seuil de déclenchement de fermeture (SΔPf) de électrovanne. Le procédé est tel que quand la différence de pression devient égale ou supérieure à un seuil de déclenchement, un signal de commande d'ouverture de l'électrovanne est élaboré ; quand la différence de pression devient égale ou inférieure à un seuil de déclenchement, un signal de commande de fermeture de l'électrovanne est élaboré, et un signal d'écoulement est élaboré en fonction de ladite différence de pression.

Le signal d'écoulement est élaboré en fonction du signal de commande d'ouverture et du signal de commande de fermeture de l'électrovanne.

Quand la différence de pression devient égale ou supérieure à un seuil de déclenchement, ledit signal de commande d'ouverture de l'électrovanne peut être délivré immédiatement.

Quand la différence de pression devient égale ou inférieure à un seuil de déclenchement, un signal de fermeture de l'électrovanne est élaboré et ledit signal de commande de la fermeture de l'électrovanne peut être différé d'un délai prédéterminé de temporisation par rapport à ce signal de fermeture.

La valeur du seuil de déclenchement engendrant le signal d'ouverture est plus grande que la valeur du seuil de déclenchement engendrant le signal de fermeture.

Le signal d'écoulement élaboré est la durée séparant un signal de commande de fermeture et un signal consécutif de commande d'ouverture de l'électrovanne.

La présente invention a également pour objet un procédé de détection d'écoulement d'un liquide, en particulier d'eau, dans une installation consommatrice comprenant au moins un moyen d'ouverture/fermeture pour délivrer du liquide, cette installation étant alimentée via une conduite d'entrée équipée d'une électrovanne engendrant une perte de charge, d'un capteur de pression en amont de l'électrovanne apte à délivrer un signal de pression amont et d'un capteur de pression en aval de l'électrovanne apte à délivrer un signal de pression aval.

Le procédé comprend le calcul de la différence entre la valeur du signal de pression amont et la valeur du signal de pression aval, et la comparaison de cette différence avec un seuil de déclenchement d'ouverture (SΔPo) et un seuil de déclenchement de fermeture (SΔPf) de l'électrovanne. Le procédé est tel que quand la différence de pression devient égale ou supérieure à un seuil de déclenchement, un signal d'ouverture de l'électrovanne est élaboré et un signal de commande d'ouverture de l'électrovanne est délivré immédiatement, quand la différence de pression devient égale ou inférieure à un seuil de déclenchement, un signal de fermeture de l'électrovanne est élaboré et un signal de commande de fermeture de l'électrovanne est délivré après un délai de temporisation, et quand la durée entre un signal de fermeture et un signal consécutif d'ouverture est inférieure à un délai prédéterminé, un signal d'écoulement est élaboré.

La valeur du seuil de déclenchement engendrant le signal d'ouverture est plus grande que la valeur du seuil de déclenchement engendrant le signal de fermeture.

Les durées entre respectivement les signaux de commande de fermeture et les signaux consécutifs de commande d'ouverture de l'électrovanne sont mémorisés.

Les durées mémorisées sont comparées et quand un nombre prédéterminé de durées successives est égales à un écart près, un signal d'alarme est délivré.

Quand un signal de commande d'ouverture n'est pas suivi d'un signal de commande de fermeture dans un délai prédéterminé de sécurité, un signal de commande de fermeture de sécurité de l'électrovanne peut être délivré.

La présente invention a également pour objet un dispositif de détection d'écoulement d'un liquide, en particulier d'eau, dans une installation consommatrice comprenant au moins un moyen d'ouverture/fermeture pour délivrer du liquide et étant alimentée via une conduite d'entrée.

Le dispositif peut comprendre une électrovanne engendrant une perte de charge, un capteur de pression monté en amont de l'électrovanne et apte à délivrer un signal de pression amont, un capteur de pression monté en aval de l'électrovanne et apte à délivrer un signal de pression aval, et des moyens de gestion aptes à commander l'électrovanne entre un état fermé et un état ouvert en fonction de la différence entre la valeur du signal de pression amont et la valeur du signal de pression aval et aptes à délivrer un signal d'écoulement en fonction de ladite différence.

La présente invention sera mieux comprise à l'étude d'une installation consommatrice d'eau et de son mode de fonctionnement, décrits à titre d'exemples non limitatifs et illustrés par le dessin sur lequel :
- la figure 1 représente un schéma d'une installation équipée d'un dispositif de détection d'écoulement ;
- la figure 2 représente un schéma électronique du dispositif de détection d'écoulement ;
- la figure 3 représente un diagramme d'un mode de fonctionnement du dispositif de détection d'écoulement ;
- et la figure 4 représente un diagramme d'un autre mode de fonctionnement du dispositif de détection d'écoulement.

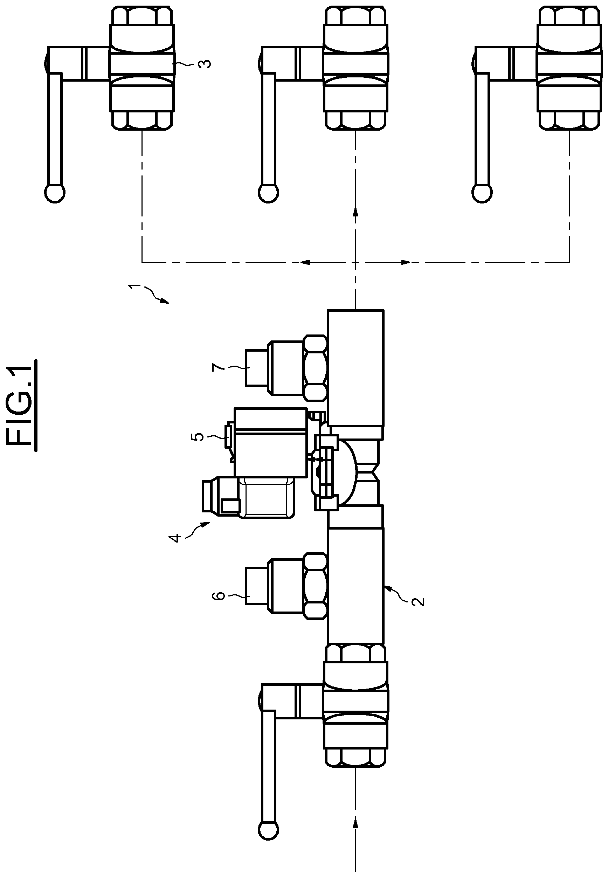

Sur la figure 1, on a représenté une installation 1 consommatrice d'un liquide, par exemple d'eau, comprenant une conduite d'entrée 2 et des moyens d'ouverture/fermeture, manuels ou commandés, permettant un puisage d'eau issue de la conduite d'entrée 2, selon la volonté de l'utilisateur. Les moyens d'ouverture/fermeture sont par exemple des robinets 3.

La conduite d'entrée 2 est équipée d'un dispositif de détection d'écoulement 4 apte à identifier, directement ou indirectement, différents types d'écoulements du liquide dans l'installation consommatrice 2, pour, en particulier, détecter des micro-fuites de liquide dues par exemple à une détérioration de cette installation, par rapport à un puisage volontaire.

Le dispositif de détection d'écoulement 4 comprend, montés sur la conduite d'entrée 1, une électrovanne 5, un capteur de pression 6 monté en amont de l'électrovanne 5, apte à délivrer un signal de pression amont Pam, et un capteur de pression 7 monté en aval de l'électrovanne 5, apte à délivrer un signal de pression aval Pav.

L'électrovanne 5 est choisie de façon à engendrer une perte de charge telle que, lorsque le liquide s'écoule, la valeur du signal de pression aval Pav est inférieure à la valeur du signal de pression amont Pam.

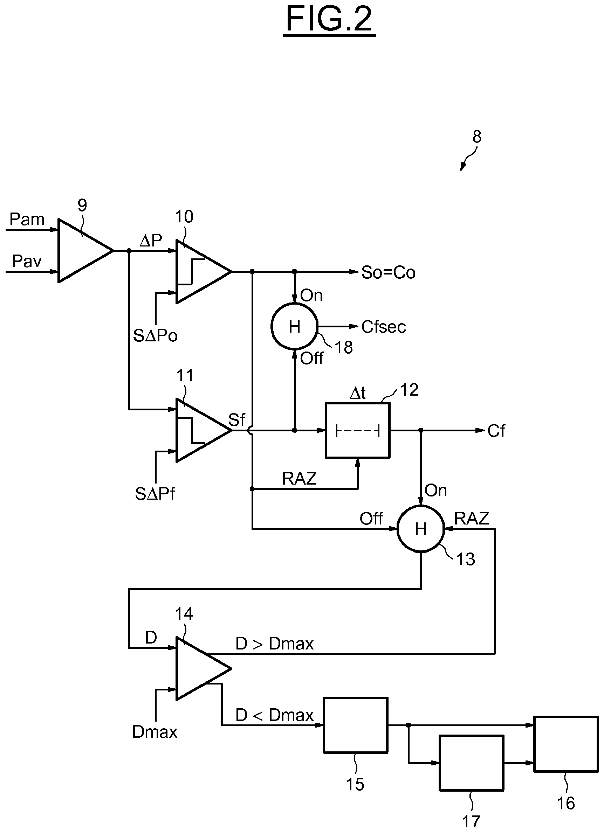

Comme le montre la figure 2, le dispositif de détection d'écoulement 4 comprend en outre un circuit électronique 8 apte à traiter les signaux Pam et Pav issus des capteurs de pression 6 et 7 et à délivrer des signaux de commande de l'électrovanne 6 et des signaux de détection d'écoulement tels que de micro-fuites ou de fuites importantes.

Le circuit électronique 8 comprend un comparateur 9 qui délivre un signal ΔP correspondant à la différence entre la valeur du signal de pression amont Pam et la valeur du signal de pression aval Pav.

Le circuit électronique 8 comprend un comparateur 10 qui reçoit le signal ΔP et qui délivre un signal So d'ouverture de l'électrovanne 5 lorsque ce signal ΔP passe au-dessus d'un seuil de déclenchement d'ouverture SΔPo prédéterminé. Ce signal So constitue un signal de commande Co directement transmis à l'électrovanne 5 pour engendrer sa mise à l'état ouvert. Dans une variante de réalisation, le signal de commande Co pourrait être décalé par rapport au signal Sf.

Le circuit électronique 8 comprend un comparateur 11 qui reçoit également le signal ΔP et qui délivre un signal Sf de fermeture de l'électrovanne 5 lorsque ce signal ΔP passe au-dessous d'un seuil de déclenchement de fermeture SΔPf prédéterminé.

Le seuil de déclenchement de fermeture SΔPf prédéterminé est inférieur au seuil de déclenchement d'ouverture SΔPo prédéterminé.

Le circuit électronique 8 comprend un temporisateur 12 qui reçoit le signal Sf et qui délivre un signal de commande Cf décalé d'une durée de temporisation Δt prédéterminée. Ce signal de commande Cf est transmis à l'électrovanne 5 pour engendrer sa mise à l'état fermé et son maintien dans cet état.

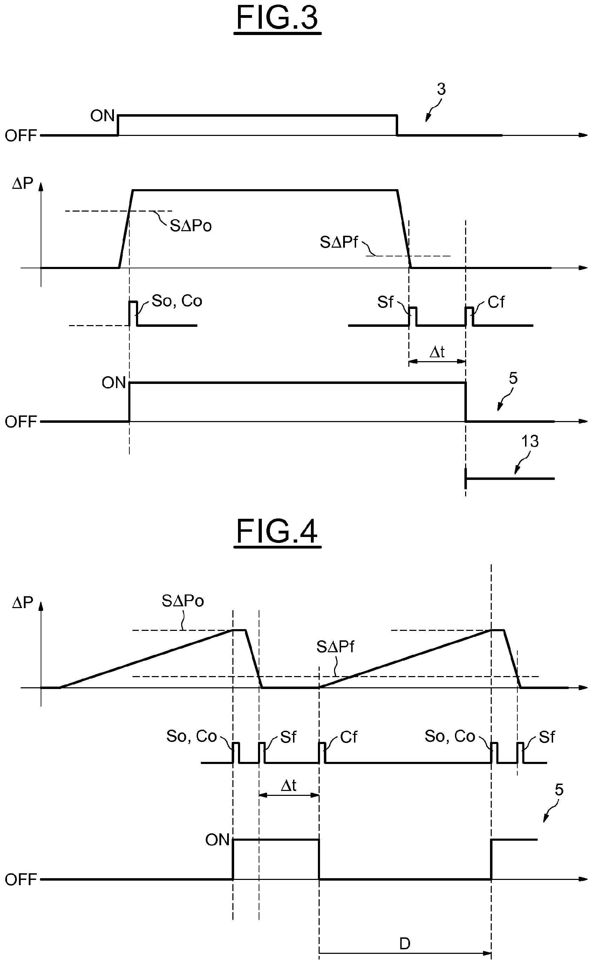

Le dispositif de détection d'écoulement 4 est apte à fonctionner comme décrit ci-dessous.
Cas 1 : Les robinets 3 sont fermés (aucun puisage n'est demandé) et l'installation 1 n'a pas de fuite ou de micro-fuite.
   L'électrovanne 5 est à l'état fermé (OFF). La valeur du signal de pression amont Pam et la valeur du signal de pression aval Pav sont égales ou équilibrées de telle sorte que le signal ΔP est égal à zéro. Il ne se passe rien.
Cas 2 : Un utilisateur effectue un puisage volontaire.
   Ce cas est illustré sur la figure 3.
   L'électrovanne 5 est à l'état fermé (OFF).
   Lorsqu'un utilisateur ouvre l'un quelconque des robinets 3, la valeur du signal de pression aval Pav chute par rapport à la valeur du signal de pression amont Pam. Lorsque la valeur du signal ΔP atteint ou passe au-dessus du seuil de déclenchement d'ouverture SΔPo, le comparateur 10 délivre le signal de commande Co qui est transmis à l'électrovanne 5 pour engendrer sa mise immédiate à l'état ouvert (ON) et délivrer de l'eau.
   Tant que le puisage volontaire persiste, c'est-à-dire tant que la valeur du signal ΔP est au-dessous du seuil de déclenchement de fermeture SΔPf, à cause de la perte de charge intrinsèque de l'électrovanne 5, cette dernière reste à l'état ouvert et de l'eau est délivrée.
   Lorsque l'utilisateur ferme le robinet 3 (aucun puisage volontaire n'est plus demandé), la valeur du signal de pression aval Pav remonte par rapport à la valeur du signal de pression amont Pam. Lorsque la valeur du signal ΔP passe au-dessous du seuil de déclenchement de fermeture SΔPf, le comparateur 11 délivre le signal Sf au temporisateur 12.
   Si aucun puisage n'est demandé pendant le délai de temporisation Δt, le temporisateur 12 délivre, à la fin du délai de temporisation Δt, un signal de commande Cf à l'électrovanne 5 pour engendrer sa mise à l'état fermé (OFF).
   Si un puisage est sollicité pendant le délai de temporisation Δt, la valeur du signal de différence de pression ΔP repasse au-dessus du seuil de déclenchement d'ouverture SΔPo. L'électrovanne 5 reste à l'état ouvert (ON) pour assurer ce puisage et le comparateur 10 délivre un signal de remise à zéro du temporisateur 12. Le délai de temporisation Δt permet d'éviter des ouvertures/fermetures successives de l'électrovanne 5 pour des demandes de puisage relativement rapprochées, intervenant pendant ce délai.
Cas 3 : Les robinets 3 sont fermés (aucun puisage n'est demandé) mais l'installation 1 subit une fuite ou une micro-fuite.

Ce cas est illustré sur la figure 4.

L'électrovanne 5 est à l'état fermé (OFF).

Sous l'effet d'une fuite ou d'une micro-fuite, la valeur du signal de pression aval Pav chute progressivement par rapport à la valeur du signal de pression amont Pam. Lorsque la valeur du signal de différence de pression ΔP atteint ou passe au-dessus du seuil de déclenchement d'ouverture SΔPo, le comparateur 10 délivre le signal de commande Co qui est transmis à l'électrovanne 5 pour engendrer sa mise immédiate à l'état ouvert (ON).

Comme les robinets 3 sont fermés, la valeur du signal de pression aval Pav remonte par rapport à la valeur du signal de pression amont Pam. Lorsque la valeur du signal de différence de pression ΔP passe au-dessous du seuil de déclenchement de fermeture SΔPf, le comparateur 11 délivre le signal Sf au temporisateur 12. A la fin du délai de temporisation Δt, le temporisateur 12 délivre un signal de commande Cf à l'électrovanne 5 pour engendrer sa mise à l'état fermé (OFF).

La micro-fuite étant par nature toujours présente, le cycle ci-dessus se reproduit.

Si à n'importe quel moment dans le ou les cycles successifs ci-dessus un puisage est sollicité par l'ouverture d'un robinet 3, le cycle en cours est stoppé et le dispositif de détection d'écoulement 4 se met en fonctionnement conformément au cas 2 décrit plus haut. Un nouveau cycle se mettra en route lors du signal à venir de commande de fermeture de l'électrovanne 5.

Le débit d'une fuite ou d'une micro-fuite étant normalement nettement inférieur aux débits normaux de puisage, elles ne perturbent pas le fonctionnement selon le cas 2. Elles n'agissent réellement sur la pression aval Pav en la réduisant que lorsque l'électrovanne 5 est fermée.

Le circuit électronique 8 comprend en outre un chronomètre 13 qui est mis en route par le signal de commande Cf de fermeture de l'électrovanne 5, délivré par le temporisateur 12, et qui est stoppé par le signal de commande Co d'ouverture de l'électrovanne 5. Le chronomètre 13 délivre donc des valeurs de durée D qui séparent les mises à l'état fermé et les mises consécutives à l'état ouvert (ON) de l'électrovanne 5.

Les valeurs de durée D sont délivrées à un comparateur 14 soumis à une valeur de durée de référence Dmax.

Quand une valeur de durée D est supérieure à la valeur de durée de référence Dmax, un signal de remise à zéro est transmis au chronomètre 13. Cela signifie qu'aucun puisage volontaire n'a été demandé pendant cette durée D et qu'il n'existe pas de micro-fuite qualifiable comme telle.

Quand une valeur de durée D est inférieure à la valeur de durée de référence Dmax, Cela signifie qu'il existe un écoulement au travers de l'électrovanne 5, par puisage volontaire et/ou par micro-fuite. Cette valeur de durée D est enregistrée dans un registre de comparaison 15 en tant que valeur Dn.

Le registre 15 est apte à comparer les valeurs de durée Dn mémorisées.

Si les valeurs de durée Dn sont très variables, cela signifie que l'on a normalement affaire à des puisages volontaires.

Si par contre le registre 15 détecte un nombre n de valeurs de durée Dn successives qui sont égales ou qui présentent entre elles un écart prédéterminé, plus précisément un petit écart prédéterminé, cela signifie que n cycles du cas 3 décrit plus haut se sont produits successivement et que l'on a affaire à une fuite ou une micro-fuite. Alors, le registre 15 délivre un signal d'alarme Sa sur un moyen de signalisation 16 sous une forme adaptée, par exemple sur un écran et/ou sous forme d'un bip. Par exemple, le registre 15 est un registre à décalage qui ne conserve en mémoire que les n dernières valeurs de durée Dn successives.

On peut remarquer qu'il ne peut y avoir de détection de fuite ou de micro-fuite tant que l'électrovanne 5 est ouverte ou reste ouverte conformément au cas 2 décrit plus haut.

Le circuit électronique 8 peut en outre comprendre un calculateur 17.

Connaissant les caractéristiques de débit de l'électrovanne 5 et disposant du nombre n de valeurs de durée D successives, le calculateur 17 peut calculer le débit de la fuite ou de la micro-fuite et délivrer cette valeur sur par exemple le moyen de signalisation 16. Disposant du débit de la fuite ou de la micro-fuite et du prix programmé de l'eau, le calculateur 17 peut en outre délivrer le coût de la perte d'eau, par exemple en valeur monétaire par jour, par mois.

Le circuit électronique 8 peut en outre comprendre un chronomètre ou temporisateur 18 mis en route par le signal So (Co) et remis à zéro par le signal Sf (ou le signal Cf). Si le signal Sf (ou le signal Cf) n'est pas délivré au chronomètre 18 au bout d'une durée de sécurité Dsec, plus grande que la durée Dmax, le chronomètre 18 délivre un signal de sécurité Sfsec à l'électrovanne 5 pour engendrer sa fermeture définitive. Cela signifie qu'il existe une fuite importante et durable, résultant par exemple d'un robinet 3 oublié à l'état ouvert par un utilisateur ou d'une importante détérioration de l'installation 1. Cet état de fermeture de sécurité est alors délivré au moyen de signalisation 16 sous une forme adaptée. Une intervention est alors obligatoire pour remettre le dispositif de détection 4 en marche normale.

Il résulte de ce qui précède que le fonctionnement du dispositif de détection 4 peut être dépendant des écarts entre les valeurs des pressions Pam et Pav mais indépendant de leurs valeurs effectives qui peuvent varier au cours du temps. Néanmoins, dans une variante, on pourrait considérer que la valeur de la pression amont Pam est fixe, de telle sorte que le capteur de pression amont pourrait être supprimé. La valeur de la pression amont Pam pourrait alors être une valeur de référence délivrée au comparateur 9.

L'électrovanne 5 peut être choisie normalement ouverte, normalement fermée ou bistable.

Selon un exemple de réalisation non limitatif, on pourrait adopter les valeurs suivantes.

La valeur du signal de temporisation Δt pourrait être comprise entre 0,1 et 15 minutes.

La valeur de la durée de référence Dmax pourrait aller au moins jusqu'à 10 secondes.

La valeur de la durée de sécurité Dsec peut être comprise entre 15 minutes et 3 heures.

Le nombre n de valeurs de durée Dn successives égales ou qui présentent entre elles un écart prédéterminé, déclenchant un signal d'alarme, peut être compris entre 5 et 50.

L'écart entre les valeurs de durée Dn successives donnant lieu à un signal d'alarme pourrait aller jusqu'à au moins 15%.

Le dispositif de détection d'écoulement 4 peut être alors capable de détecter des micro-fuites à partir de quelques gouttes par minute.

Le dispositif de détection d'écoulement 4 pourrait en outre être équipé d'un moyen, par exemple un bouton, pour suspendre provisoirement le contrôle de l'écoulement, en plaçant volontairement l'électrovanne 5 à l'état ouvert, pour par exemple satisfaire une demande prolongée d'eau. La remise en route du contrôle de l'écoulement comme décrit précédemment pourrait se faire de préférence automatiquement au bout d'une durée prédéterminée, par exemple longue, ou alors sous l'effet d'un moyen, par exemple d'un bouton.

L'installation 1 pourrait en outre être équipée d'une conduite de by-pass apte à court-circuiter l'électrovanne 5, ce by-pass pouvant être muni d'une vanne manuelle pour pouvoir alimenter les robinets 3 au cas où le dispositif de détection d'écoulement 4 serait bloqué ou défectueux.

Dans l'exécution décrite en référence au dessin, la pression amont Pam, qui constitue une valeur de pression de référence, éventuellement variable si la pression amont varie, pourrait être remplacée par une autre pression de référence telle que, par exemple, une valeur de pression fixe ou la valeur de la pression aval mesurée par le capteur de pression aval 7 juste après chaque fermeture de l'électrovanne, et mémorisée, sans modifier le fonctionnement décrit. Dans ces cas, le capteur de pression amont 6 pourrait être supprimé.

## Revendications

1. Procédé de détection d'écoulement d'un liquide, en particulier d'eau, dans une installation consommatrice comprenant au moins un moyen d'ouverture/fermeture (3) pour délivrer du liquide, cette installation étant alimentée via une conduite d'entrée (2) équipée d'une électrovanne (5), d'un capteur de pression (6) en amont de l'électrovanne apte à délivrer un signal de pression amont (Pam) et d'un capteur de pression (7) en aval de l'électrovanne apte à délivrer un signal de pression aval (Pav),
procédé comprenant :
le calcul de la différence (ΔP) entre la valeur du signal de pression amont (Pam) et la valeur du signal de pression aval (Pav),
la comparaison de cette différence (ΔP) avec un seuil de déclenchement d'ouverture (SΔPo) et un seuil de déclenchement de fermeture (SΔPf), la valeur du seuil de déclenchement d'ouverture (SΔPo) étant plus grande que la valeur du seuil de déclenchement de fermeture (SΔPf) ;
et procédé dans lequel :
quand l'électrovanne (5) est fermée et que la différence de pression (ΔP) devient égale ou supérieure audit seuil de déclenchement d'ouverture (SΔPo), un signal (Co) de commande d'ouverture de l'électrovanne (5) est élaboré pour engendrer l'ouverture de cette dernière,
quand l'électrovanne (5) est ouverte et que la différence de pression (ΔP) devient égale ou inférieure à un seuil de déclenchement de fermeture (SΔPf), un signal (Cf) de commande de fermeture de l'électrovanne (5) est élaboré pour engendrer la fermeture de l'électrovanne (5),
et dans lequel les durées (Dn) entre respectivement les signaux de commande de fermeture (Cf) et les signaux consécutifs de commande d'ouverture (Co) de l'électrovanne (5) sont mémorisées et sont comparées et, si un nombre prédéterminé (n) de durées (Dn) successives égales, à un écart près, est détecté, un signal d'alarme (Sa) est délivré.

2. Procédé selon la revendication 1, dans lequel, quand la différence de pression (ΔP) devient égale ou supérieure audit seuil de déclenchement d'ouverture (SΔPo), ledit signal (Co) de commande d'ouverture de l'électrovanne (5) est délivré immédiatement.

3. Procédé selon l'une des revendication 1 et 2, dans lequel quand la différence de pression (ΔP) devient égale ou inférieure audit seuil de déclenchement de fermeture (SΔPf), un signal (Sf) de fermeture de l'électrovanne (5) est élaboré et, si la différence de pression (ΔP) ne devient pas égale ou supérieure audit seuil de déclenchement d'ouverture (SΔPo) pendant un délai prédéterminé de temporisation (Δt) suivant ce signal (Sf) de fermeture, ledit signal (Cf) de commande de Ia fermeture de l'électrovanne (5) est élaboré pour engendrer la fermeture de l'électrovanne (5).

4. Procédé selon l'une quelconque des revendication 1 à 3, dans lequel quand un signal de commande d'ouverture (So, Co) n'est pas suivi d'un signal de commande de fermeture (Sf, Cf) dans un délai prédéterminé de sécurité, un signal de commande de fermeture de sécurité (Cfsec) de l'électrovanne (5) est délivré.

5. Dispositif de détection d'écoulement d'un liquide, en particulier d'eau, dans une installation consommatrice (1) comprenant au moins un moyen d'ouverture/fermeture (3) pour délivrer du liquide et étant alimentée via une conduite d'entrée (2), comprenant :
une électrovanne (5) engendrant une perte de charge,
un capteur de pression (6) monté en amont de l'électrovanne et apte à délivrer un signal de pression amont (Pam),
un capteur de pression (7) monté en aval de l'électrovanne et apte à délivrer un signal de pression aval (Pav),
des moyens de gestion (8) aptes à délivrer des signaux de commande d'ouverture (Co) et des signaux de commande de fermeture (Cf) de l'électrovanne (5) en fonction de la comparaison de la différence entre la valeur du signal de pression amont (Pam) et la valeur du signal de pression aval (Pav) avec un seuil de déclenchement d'ouverture (SΔPo) et un seuil de déclenchement de fermeture (SΔPf), la valeur du seuil de déclenchement d'ouverture (SΔPo) étant plus grande que la valeur du seuil de déclenchement de fermeture (SΔPf),et aptes à délivrer un signal d'alarme en fonction des durées (Dn) entre les signaux de commande de fermeture (Cf) et les signaux consécutifs de commande d'ouverture (Co)de l'électrovanne, lesdites durées (Dn) ayant été mémorisées et comparées, l'alarme étant délivré si un nombre prédéterminé (n) de duréees (Dn) successives égales, à un écart près, est détecté.

## Patentansprüche

1. Verfahren zum Detektieren des Flusses einer Flüssigkeit, insbesondere von Wasser, in einer Verbraucheranlage, die mindestens ein Öffnungs-/Schließmittel (3) aufweist, um Flüssigkeit abzugeben, wobei diese Anlage über eine Einlassleitung (2) versorgt wird, die mit einem Magnetventil (5), einem Drucksensor (6), der sich vorgelagert vor dem Magnetventil befindet, der geeignet ist, ein vorgelagertes Drucksignal (Pam) abzugeben, und einem Drucksensor (7) ausgestattet ist, der sich nachgelagert nach dem Magnetventil befindet, der geeignet ist, ein nachgelagertes Drucksignal (Pav) abzugeben,
wobei das Verfahren umfasst:
das Berechnen der Differenz (ΔP) zwischen dem Wert des vorgelagerten Drucksignals (Pam) und dem Wert des nachgelagerten Drucksignals (Pav),
das Vergleichen dieser Differenz (ΔP) mit einer Schwelle der Öffnungsauslösung (SΔPo) und einer Schwelle der Schließauslösung (SΔPf), wobei der Wert der Schwelle der Öffnungsauslösung (SΔPo) größer als der Wert der Schwelle der Schließauslösung (SΔPf) ist,
und wobei bei dem Verfahren:
wenn das Magnetventil (5) geschlossen ist und die Druckdifferenz (ΔP) gleich der oder größer als die Schwelle der Öffnungsauslösung (SΔPo) wird, ein Steuersignal (Co) zum Öffnen des Magnetventils (5) ausgearbeitet wird, um das Öffnen dieses Letzteren zu bewirken,
wenn das Magnetventil (5) offen ist und die Druckdifferenz (ΔP) gleich einer oder niedriger als eine Schwelle der Schließauslösung (SΔPf) wird, ein Steuersignal (Cf) zum Schließen des Magnetventils (5) ausgearbeitet wird, um das Schließen des Magnetventils (5) zu bewirken,
und wobei die Zeitspannen (Dn) zwischen jeweils den Steuersignalen zum Schließen (Cf) und den aufeinanderfolgenden Steuersignalen zum Öffnen (Co) des Magnetventils (5) gespeichert werden und verglichen werden und, wenn eine vorbestimmte Anzahl (n) von gleichen aufeinanderfolgenden Zeitspannen (Dn) in einem nahen Abstand erfasst wird, ein Alarmsignal (Sa) abgegeben wird.

2. Verfahren nach Anspruch 1, wobei, wenn die Druckdifferenz (ΔP) gleich der oder größer als die Schwelle der Öffnungsauslösung (SΔPo) wird, das Steuersignal (Co) zum Öffnen des Magnetventils (5) unverzüglich abgegeben wird.

3. Verfahren nach einem der Ansprüche 1 und 2, wobei, wenn die Druckdifferenz (ΔP) gleich der oder niedriger als die Schwelle der Schließauslösung (SΔPf) wird, ein Signal (Sf) zum Schließen des Magnetventils (5) ausgearbeitet wird und, wenn die Druckdifferenz (ΔP) nicht gleich der oder größer als die Schwelle der Öffnungsauslösung (SΔPo) während einer vorbestimmten Verzögerungszeit (Δt) nach diesem Signal (Sf) zum Schließen wird, das Steuersignal (Cf) zum Schließen des Magnetventils (5) ausgearbeitet wird, um das Schließen des Magnetventils (5) zu bewirken.

4. Verfahren nach einem der Ansprüche 1 bis 3, wobei, wenn innerhalb einer vorbestimmten Sicherheitszeit auf ein Steuersignal zum Öffnen (So, Co) kein Steuersignal zum Schließen (Sf, Cf) folgt, ein Sicherheitssteuersignal zum Schließen (Cfsec) des Magnetventils (5) abgegeben wird.

5. Vorrichtung zum Detektieren des Flusses einer Flüssigkeit, insbesondere von Wasser, in einer Verbraucheranlage (1), die mindestens ein Öffnungs-/Schließmittel (3) aufweist, um Flüssigkeit abzugeben, und die über eine Einlassleitung (2) versorgt wird, umfassend:
ein Magnetventil (5), das einen Druckverlust erzeugt,
einen Drucksensor (6), der vorgelagert vor dem Magnetventil befestigt ist und der geeignet ist, ein vorgelagertes Drucksignal (Pam) abzugeben,
einen Drucksensor (7), der nachgelagert nach dem Magnetventil befestigt ist und der geeignet ist, ein nachgelagertes Drucksignal (Pav) abzugeben,
Verwaltungsmittel (8), die geeignet sind, Steuersignale zum Öffnen (Co) und Steuersignale zum Schließen (Cf) des Magnetventils (5) in Abhängigkeit von dem Vergleichen der Differenz zwischen dem Wert des vorgelagerten Drucksignals (Pam) und dem Wert des nachgelagerten Drucksignals (Pav) mit einer Schwelle der Öffnungsauslösung (SΔPo) und einer Schwelle der Schließauslösung (SΔPf) abzugeben, wobei der Wert der Schwelle der Öffnungsauslösung (SΔPo) größer als der Wert der Schwelle der Schließauslösung (SΔPf) ist, und die geeignet sind, ein Alarmsignal in Abhängigkeit von den Zeitspannen (Dn) zwischen den Steuersignalen zum Schließen (Cf) und den aufeinanderfolgenden Steuersignalen zum Öffnen (Co) des Magnetventils abzugeben, wobei die Zeitspannen (Dn) gespeichert und verglichen worden sind, wobei der Alarm abgegeben wird, wenn eine vorbestimmte Anzahl (n) von gleichen aufeinanderfolgenden Zeitspannen (Dn) in einem nahen Abstand erfasst wird.

## Claims

1. Method for detecting the flow of a liquid, in particular water, in a consuming installation comprising at least one opening/closing means (3) for supplying liquid, this installation being supplied via an inlet pipe (2) fitted with a solenoid valve (5), a pressure sensor (6) upstream of the solenoid valve that is able to issue an upstream pressure signal (Pam) and a pressure sensor (7) downstream of the solenoid valve that is able to issue a downstream pressure signal (Pav);
said method comprising:
calculation of the difference (ΔP) between the value of the upstream pressure signal (Pam) and the value of the downstream pressure signal (Pav),
comparison of this difference (ΔP) with an opening triggering threshold (SΔPo) and a closing triggering threshold (SΔPf), the value of the opening triggering threshold (SΔPo) being greater than the value of the closing triggering threshold (SΔPf);
and method in which:
the solenoid valve (5) is closed and the pressure difference (ΔP) becomes equal to or greater than said open triggering threshold (SΔPo), a command signal opening (Co) the solenoid valve (5) is generated so as to cause the opening of the latter,
when the solenoid valve (5) is open and the pressure difference (ΔP) becomes equal to or less than a closing triggering threshold (SΔPf), a command signal closing (Cf) the solenoid valve (5) is generated so as to cause the closing of the solenoid valve (5),
and in which the times (Dn) between respectively the command signals closing (Cf) and the consecutive command signals opening (Co) the solenoid valve(s) are memorized and compared and if a predetermined number (n) of approximately equal successive times (Dn) to within an offset is detected, an alarm signal (Sa) is issued.

2. Method according to Claim 1, in which, when the pressure difference (ΔP) reaches or exceeds said threshold for triggering the opening (SΔPo), said command signal (Co) to open the solenoid valve (5) is issued immediately.

3. Method according to either of Claims 1 and 2, in which when the pressure difference (ΔP) reaches or falls below said threshold for triggering the closing (SΔPf), a signal (Sf) to close the solenoid valve (5) is generated and, if the pressure difference (ΔP) does not become equal to or greater than said opening triggering threshold (SΔPo) during a predetermined time out period (Δt) following this closing signal (Sf), said control signal (Cf) for closing the solenoid valve (5) is generated so as to cause the closing of the solenoid valve (5).

4. Method according to any one of Claims 1 to 3, in which when an opening command signal (So, Co) is not followed by a closing command signal (Sf, Cf) within a predetermined safety time, a safety command signal (Cfsec) closing the solenoid valve (5) is issued.

5. Device for detecting the flow of a liquid, in particular water, in a consuming installation (1) comprising at least one opening/closing means (3) for supplying the liquid that is supplied via an inlet pipe (2), comprising:
a solenoid valve (5) generating a pressure drop,
a pressure sensor (6) fitted upstream of the solenoid valve that is able to issue an upstream pressure signal (Pam),
a pressure sensor (7) fitted downstream of the solenoid valve that is able to issue a downstream pressure signal (Pav),
management means (8) able to deliver opening control signals (Co) and closing control signals (Cf) for the solenoid valve (5) as a function of the comparison of the difference between the value of the upstream pressure signal (Pam) and the value of the downstream pressure signal (Pav) with an opening triggering threshold (SΔPO) and a closing triggering threshold (SΔPf), the value of the opening triggering threshold (SΔPO) being greater than the value of the closing triggering threshold (SΔPf) and able to deliver an alarm signal as a function of the times (Dn) between the closing control signals (Cf) and the consecutive opening control signals (Co) of the solenoid valve, said times (Dn) having being memorized and compared, the alarm being delivered if a determined number (n) of successive equal times (Dn), to within an offset, is detected.
